# EUROPEAN PATENT APPLICATION

(11) **EP 3 511 145 A1**
(43) Date of publication of application: **17.07.2019**
(21) Application number: 17848207.1
(22) Date of filing: 06.09.2017
(51) Int. Cl.: B29C 45/00

(54) **DEVICE FOR INJECTING LOW-MELTING-POINT ALLOYS OR METALS INTO AN ELASTOMER POLYMER MOULD, ELASTOMER POLYMER MOULD USED AND METHOD FOR OPERATING THE ASSEMBLY**

(30) Priority: 06.09.2016 ES 201631163
(71) Applicant: Comercial Nicem-Exinte, S.A. - Coniex, 08184 Palau-Solita I Plegamans (Barcelona) (ES)
(72) Inventor: NAVARRO TEIXIDÓ, Ferran, 08184 Palua Solità I Plegamans (ES)
(74) Representative: Ponti & Partners, S.L.P
(86) International application number: PCT/ES2017/070599
(87) International publication number: WO 2018/046787

(57) **Abstract**

The present invention discloses a new process for the injection of metallic materials into polymer-based moulds, the mould itself required for a process of this nature, and the equipment which will execute the process and will employ the mould, in such a way that moulds with greater or lesser properties of flexibility are subjected to a pressurised injection of metal thereon, it being possible to adjust and coordinate the parameters of pressure, flowrate, closure of the mould, and the conditions of the material, thanks to a new polymer-based mould which adapts its configuration to the rest of the system and to the pressurised injection of the material.

## Description

More specifically, the present invention relates to a new equipment and process for the injection of metallic materials or alloys with a low melting point into polymer-based moulds of the elastomeric type for the manufacture of pieces.

### Background of the invention

Processes for the injection of materials on non-flexible moulds to achieve the manufacture of pieces are widely known, and therefore belong to the state of the art.

These processes are based on the injection of the material at a stipulated pressure in order to transfer said material into the non-flexible, usually metallic mould, wherein they solidify, forming the piece within the mould, it being necessary to open the mould to extract them and to continue with manufacture.

The use of said moulds prevents their simple unmoulding, it being necessary to have unmoulding systems to aid in the execution thereof.

The changes in the form of the pieces imply the preparation of new metal moulds or their modification. The preparation of each of said moulds entails the manufacture of the same from materials whose cost is considerable, also entailing a significant time period for the supply of said moulds, delaying the launch of each piece, not to mention the consequences of errors in the manufacture of a new mould regarding costs and time wastage. All these drawbacks create, among other consequences, the impossibility to create small series of pieces at a reduced cost.

Furthermore, also well-known and belonging to the state of the art are the processes for centrifugal moulding in flexible moulds, achieving greater speed in the creation of the moulds and reducing costs, but with great deficiencies in their application, as they do not enable the creation of pieces with tight dimensional tolerances, nor the qualities or finishes which may be created at higher injection pressures than centrifugal action. Besides, said centrifuging causes distortions in the pieces manufactured in each casting, producing a distortion proportional to the radius of the position of the piece with regard to the rotational axis of the centrifugal mould, these deformations being extremely difficult to correct and control.

Finally, the control of processes associated with the injection of metal into metal moulds, such as the temperature of the metal to be injected or the possibility of regulating the injection pressure is known, although these parameters are not associated with other parameters concerning the closure of the mould or the vacuum, being static throughout the execution of the entire process with the parameters entered initially.

Thus, it is understood that the known processes and equipment intervening in the manufacture by moulding of metals present various drawbacks, whether due to the supply times and the high costs of preparing the new moulds to be employed for each new piece, while the use of flexible moulds for castings suffer from a lack of quality of the pieces, both in dimensions and in finish, and likewise a lack of resistance and stability for the injection of metals, all by using processes with uncontrolled basic operating parameters or statically controlled, uncoordinated parameters.

### Description of the invention

The object of the present invention is to create a new moulding equipment for the injection of metallic pieces, enabling a reduction in cost and in the time for the launching of the mould, by using polymeric moulds prepared for said injection of metal, enabling the manufacture of pieces of certain complexity, with dimensional and finish quality control, by means of a process and equipment enabling the coordinated dynamic regulation of the action parameters, in order to perform said injection into the mould with a certain degree of flexibility.

The creation of an adapted polymeric mould enabling its use in the pressurised injection of metal is also an object of the present invention.

To achieve this, the invention advocated is embodied in a method and equipment to perform the pressurised injection of a metallic material or alloys with a low melting point into a fixed moulding system of a polymeric type, this being of an elastomeric type, preferably high-temperature vulcanised (HTV) organic or inorganic elastomers, or by means of liquid silicone rubber (LSR), thus endowing it with the resulting flexible properties to a greater or lesser degree, in accordance with the specific application for which it is to be used, with a mould hardness of between 20 and 95 Shore A.

The joint application of these two concepts, the injection of metallic material with a low melting point or of alloys with a low melting point, hereinafter referred to in the present description as "metal", and the use of a polymeric mould of an elastomeric type, hereinafter referred to in the present description as "polymeric mould", makes necessary the creation of an innovative method with the characteristics and stages stated below, this being performed in likewise innovative equipment, enabling the performance of a totally controlled and automated process, should said automation be required, to enable an ideal, repeatable quality in any piece to be manufactured, this innovative injection of metal into a polymeric mould not being comparable with the injection of metal into a metallic mould, as the control of the stages and parameters of closure of the mould, the injection of the metal, the creation of the vacuum, etc. must be configured in a coordinated manner, dynamically during injection and controlled throughout the duration of the injection process.

The equipment for the injection of metal into a polymeric mould features means for the transfer and injection of the metal to be injected under suitable conditions, wherein said conditions are based on the state of the ideal temperature of the material in the metal supply means, which shall be the melting point temperature of said metal or above this, in order that said metal may be conveyed to the pressure system in order to perform the injection, and the correct stirring of said material. These temperature conditions will depend on the metal to be used in the injection and on the programmed duration of the injection as, if it is required to maintain the temperature of the metal in the equipment for a longer time until it reaches the mould, because a slower injection is being performed, the option exists to maintain the temperature of said metal slightly above melting point, in order to prevent it from solidifying before time.

The means for the transfer and injection of the metal are fed by the metal supply means, preferably inserting said transfer and injection means partially or totally into the aforementioned metal supply means, that is, a crucible or metal melting furnace, collecting the metal from said container or corresponding equipment under said ideal conditions for injection, transporting said metal to the pressure system in order to perform the injection of the metal on the polymeric mould.

With regard to the devices wherein the molten metal is contained, these feature heating systems with a temperature control for said systems, and with different systems for stirring, filtering, or a combination of these or other elements which achieve the required conditions of the metal for optimal injection, as the materials to be injected may be of different characteristics. Metals with a low melting point, below 660 °C, are used, such as alloys containing lead, tin, zinc, aluminium or magnesium, although a different type of metals may also be used in this equipment/process.

By way of an example, the table below shows the correspondence between metals and alloys which may be used in the present process, and the conditions of temperature at which it is decided to maintain said material in order to proceed with its transfer to the pressure system in preparation for injection. It must be borne in mind that this parameter is fundamental in order that the material may be at the correct temperature during the injection process and to prevent premature solidification due to the necessary injection times.

| Product to be injected | Temperature range in crucible |
|---|---|
| Zamak 5 (ZnAl4Cu1) | 400 ºC - 480 ºC |
| Pewter P60 Sn60Sb4Pb36 | 280ºC - 330 ºC |

The control of said temperature of the metal in the supply means is performed by an adjustment which enables its maintenance within a range of plus/minus 5-10 degrees centigrade, with the aim of preventing differences in the consecutive injection processes performed.

The metal injection equipment may preferably feature an automatic system for monitoring the level of metal in the transfer and injection means, so that a drop in the level within the device containing the molten metal will not affect the action of the injection system due to having a lower level of metal subsequent to the various injection processes performed. This automatic system may be entrusted with the addition of metal into the system in order that there may always be the same optimal level therein, or may be a system which displaces the injection equipment or adjusts the displacement of the pressure system in pursuit of the optimal level, varying in a controlled manner the travel/position of the injection system.

The metal transfer and injection means consist of means for the displacement via the same of said metal, and of a pressure system to which the molten metal is conveyed by using said transfer means; said pressure system being entrusted with the injection of the metal on the polymer-based mould.

Commonly, these transfer and injection means may consist of a heated gooseneck, submerged within the crucible or furnace with the material to be injected, with a pressure system which performs the injection on the mould. Generally, said transfer and injection means are characterised by having transfer and filling means for an injection chamber, generally of a syphon type, upstream of the mould, which fills with the metal to be injected coming from the furnace or crucible, and wherein the pressure system acts for its injection on the mould inlet. It is understood that other methods for the filling of an impulsion chamber may be used, on condition that they maintain the metal under the conditions for injection established for the type of metal.

The pressure system is based on an assembly of elements which propel the material to be injected into the mould at a particular pressure, this not being atmospheric, configurable manually or automatically by the adjustment and control means. Generally, said pressure system is operated by the action of a mechanical means (pneumatic piston, hydraulic system, linear actuators of the auger type or similar, etc.) on the metal disposed in the impulsion chamber, said pressure system being controlled by the regulation and control means, it being possible to adjust the parameters of pressure, travel, stages and flowrate of the material when injected.

Adjustment is carried out in the different stages into which the injection process may be divided, in accordance with the user's wishes or requirements, as the advantageous use of feed systems which are configurable in their position of displacement, also in their displacement flowrate, whether by adjustment of the pressure exerted by the pneumatic or hydraulic feed system, or the flowrate of a linear actuator system, it is possible to adjust said flowrate, travel and pressure of the pressure system for each period/stage into which the injection process is divided, enabling the control and adjustment of the flowrate of filling the mould, in accordance with the characteristics of the pieces to be formed, of the mould, etc.

The flowrate of the metal at the inlet of the piece shall be configured to be between 0.05 m/s and 10 m/s; therefore the adjustment of the pressure in the pressure system will vary between 0.1 bar and 50 bar, providing a desired acceleration and a final flowrate depending on the thrust surface of the system employed, for example the surface of the piston which will propel the metal through the gooseneck toward the nozzle and into the mould. All of the above, controlling the travel of said pressure system with millimetric precision, in order to control the quantity of material injected into the polymeric mould, and even injecting exact quantities, by means of adjustment of the travel of the piston or injection element employed. This is innovative in comparison with other methods controlling injection pressure into a metallic mould, as in order to use a polymeric mould which is flexible, or features a certain degree of flexibility, it is necessary to control these stages dynamically and with greater precision in order to prevent a distortion of the mould which would be unacceptable for the manufacture of pieces; this is not the case with metallic moulds, as the injection pressure is controlled only in accordance with the type of piece to be injected; if the operation were conducted as in metallic moulds, distortions or material flash from the polymeric mould would arise, rendering useless manufactured pieces.

As we have seen, the aim of the metal transfer and injection means is to inject the metal into the polymeric mould in order to execute the casting of the pieces. For this operation to be performed correctly, the equipment for injection onto a polymeric mould features a mould supporting means which closes the same and couples to the corresponding part of the transfer and injection means, usually at its metal outlet pressure nozzle.

More specifically, the mould supporting and closure means are formed at least by a system for the positioning/centring of the mould, usually employing the fitting of the mould with complementary shapes between the mould and the supporting means, such as centring devices, so that the same may be located in the correct position for its coupling, and said supporting and closure means also being formed by a system for closing at adjustable pressure. Thus, the polymer-based mould will be located in the supporting and closure means in accordance with a positioning/centring system, and the assembly will be closed at a pressure such that it counteracts the injection pressure, so that the injection of metal into said mould at the desired pressure may be performed with no risk of separation thereof nor of flash on the pieces, but also to avoid distortion problems due to excessive pressure on the mould.

The pressure exerted by the supporting and closure means for the correct closure of the mould is manually or automatically adjustable, preferably reaching 100 kN, from the corresponding control means, and may even be varied in accordance with the moment of the injection of the process. The pressure exerted by said supporting and closure means shall be that corresponding to the force exerted by the pressure of the projected area of the piece to be injected, plus a pressure associated with the hardness of the chosen polymeric mould, as the pressure cannot be the same for moulds with greater or lesser flexibility, and a safety factor. As an additional measure, in the supporting and closure means a seal may be disposed, integrated in the mould or independent therefrom, to facilitate the closing action at lower pressures.

The injection equipment features an airtight coupling at working pressure between the transfer and injection means and the mould, preferably at the coupling between the outlet of the transfer and injection means and the mould support and closure means assembly holding said mould. Said airtight coupling is executed by the pressurised part-to-part contact between the nozzle and the mould support, or the mould itself. This airtight coupling system features complementary shapes in order that, when in contact and under pressure, the metal injected under pressure will not leak through said joint, bearing in mind that the coupling must feature a conical or similar shape, opening towards the mould, to enable the expulsion of the solidified sprue.

This coupling system may be executed directly; metal part of the nozzle against metal part of the mould support, but in the event of desiring thermal insulation of the nozzle area, to prevent the solidification of the metal during injection, contact areas of a rubber-like material are inserted in the coupling shapes; furthermore, due to their certain flexibility, these act as a seal between the bodies coupled under pressure.

For the same reason, that of preventing the solidification of the metal within the transfer and injection means and at the inlet of the polymeric mould, the slope at which the injection of the metal into the mould is performed must allow the molten metal to return to the heated areas by the gravity of the surplus material on conclusion of the injection process, or leaving the nozzle in a position where it cannot accumulate metal that may solidify or even adopt a condition different from that of the location containing the molten metal for injection, preventing it from solidifying at some point of the equipment, causing undesired blockages. This slope shall be equal to or greater than 10 degrees below horizontal, and up to vertical positions below the mould for upward or downward injection.

The injection equipment features a system for creating a vacuum within the mould, enabling the extraction of the air for the correct filling of the housings of the pieces, controlled manually or automatically by the adjustment and control means. Said vacuum system enables its adjustment at any step of the process until a vacuum with an absolute pressure of 5 mbar is obtained.

This vacuum process is performed before and/or during the regulated injection of metal, in order that the volume of air displaced by the molten metal injected into the mould is a minimum, avoiding possible problems of bubbles, distortions or the prevention of the correct filling of the ducts and spaces for the formation of pieces executed in the mould.

A pressure limiting system may be included, to prevent excess vacuum and the obstruction of the channels for the passage of metal through the mould. This system for creating a vacuum within the mould is coupled to the mould in an airtight manner, by the pressure of the vacuum system nozzle against an aperture in the mould, where said aperture communicates with all the internal channels and spaces which will receive the pressurised metal injected through independent or specific channels communicating therewith, thus connecting the space destined to form the piece with the vacuum system via a minimal cross-section through which metal will not flow, where said cross-section shall be smaller than 4 mm2, although this may be variable, in accordance with the metal employed, the conditions of injection, etc.

This vacuum system shall usually be formed by a system with a vacuum pump, a vacuum reservoir, measuring elements, filters for particulates and possible contaminants, and the corresponding valves and ducts, as well as nozzles or means for connection to the mould.

The application of polymeric moulds in injection processes may require heat-removal means, and in some cases even means for the cooling of the mould in order to achieve the correct manufacture of the pieces, and also to maintain the properties of said moulds. In the case of polymers with high thermal insulating power, the option of a prior heating to prepare the mould for injection may be considered, or alternatively, including in the mould a heating or cooling layer or element to facilitate the exchange of heat with the material injected, with the inclusion, during the stage of vulcanisation of the moulds, of electric elements in the mould itself, or channels for the passage of cooling/heating fluids. Externally, one of the possible forms of cooling is using ventilated tables, or the cooling of the supporting and closure means.

All the components of the equipment, whether the device for maintaining the conditions of the metal in the crucible or furnace, the transfer and injection means, the mould supporting and closure means, and the operation of the vacuum system, are governed by the means for the regulation and control of the equipment/process, which may be adjusted both manually and automatically, to adapt the parameters of the equipment and the process to different types of pieces, injection materials, moulds, specifications from the client, etc.

This regulation and control, preferably automatic, is performed thanks to said process regulation and control means. The parameters are controlled and modified by these regulation and control means by default prior to each injection method, in accordance with the mould, the material to be injected and the piece to be obtained, these being dynamically modifiable during the injection process, to enable the correction of parameters such as the closure pressure, which evolve dynamically during the injection process and require different, coordinated adjustment at the different stages of the process. These parameters are:
- The temperature and stirring parameters of the material to be injected within the supply device.
- The force exerted on the mould by the supporting and closure means.
- The pressure, position and injection flowrate of the mechanical means propelling the molten metal.
- Control of the quantity, flowrate, pressure, temperature, etc. of the material injected and of the transfer means.
- The parameters of mould cooling temperature and solidification time.
- The parameters of vacuum pressure and the duration of the vacuum system operation.

The polymer-based moulds employed up to the present for the moulding of metallic materials in centrifugal machines or in other types of moulding systems are not applicable for pressurised metal injection processes, due to the distortions of the mould stated in the State of the Art, and due to the high pressure and the metal employed in said injection; therefore, the polymeric mould to be used in this injection equipment will depend on the requirements of the piece to be injected, possibly requiring from an elastomeric-type mould providing said elastic property, to other polymers with almost unappreciable elasticity, employing a configuration in the metal inlet system of the mould to prevent damage thereto and the correct distribution of a material such as molten metal, bearing in mind that moulds of greater hardness will be employed to achieve greater quality in the pieces, the mould being less deformable, or a mould with greater flexibility will be employed for complicated pieces, to enable an easier unmoulding thereof.

Said mould, of variable geometry according to requirements, be it round, square or featuring other geometry, and with an also variable polymeric composition according to the requirements for regulating the properties of flexibility, is disposed in the usual two sections, in order to perform the unmoulding of the same and the extraction of the pieces, at least one of said sections featuring a number of means for the ingress of the material injected, which lead from said inlet to the distribution channels to the cavities which form the pieces, it being possible to feature various inlets for the simultaneous action of various metal injection nozzles on the same mould.

The ingress of material must be performed while maintaining the conditions designed; therefore, the connection between the transfer and injection means and the mould inlet system must be airtight in order to perform the pressurised injection; this may usually be achieved by the coupling of the supporting and closure means, wherein the mould and its inlet system are linked to the transfer and injection means of the mould, or by the direct connection of the transfer and injection means to said mould inlet means, as stated above concerning the pressurised part-to-part coupling between said two parts.

To adapt the polymer-based mould system to the pressurised metal injection process, achieving the necessary resistance to the working pressure of the injection equipment, the mould features its own distribution means, located in its interior, in the inlet system of the mould, at the point of branching/distribution of the incoming flow from the transfer and injection means, toward the filling channels of the mould. This distribution means, integrated in the mould, preferably fixed during the vulcanisation/formation process of the mould, is executed in a material with a greater resistance than that of the elastomer employed in the formation of the mould, preferably elastomeric materials of a greater hardness than that of the mould, metallic or ceramic materials which cannot be altered or damaged by the pressures employed nor by the flow of metal at said pressure; it shall therefore feature a component resistant to deterioration by the heat of the injection temperature and resistant to the mechanical wear from the flow of metal; all of this within the shape of each mould and of the channels and cavities of the pieces, channelling and distributing the incoming flow to the internal channels of the mould, without the injection pressure affecting the wall of the polymeric mould, thus preventing the distortion of the same and the possible losses of load due to the direct, perpendicular impact against a wall of said mould, from where it is distributed among the channels, said distribution means being the start point of each of said internal channels of the mould.

Likewise, a new system of independent or specific ducts is created in the mould, connecting the spaces destined to form the pieces and therefore in contact with the distribution channels which, prior to injection, have air in their interior, and wherein said ducts are connected to the vacuum system.

Additionally, the design of the mould includes overflows, which may collect any air remaining subsequent to creating the vacuum, and which may be pushed by the metal once injection has commenced.

Optionally, the moulds employed in the present metal injection system may present internal protections or new distribution components at other points of impact of the material injected, as well as at the inlet from the transfer and distribution means. These may be located at points liable to receive the pressure and flowrate of the material injected, such as the points of direct impact from the nozzle outlet, branches, etc., as well as being formed in a composition and with a design able to receive said pressure and flowrate of the material injected, without altering the final shape of the piece under advantageously small tolerances, resisting deterioration by heat and the mechanical wear from the metal injected, possibly being, like the distribution component, of elastomeric materials with a greater hardness than the elastomer of the mould, metallic or ceramic materials. These protections may be made superficially on the mould, or internally at chosen points to increase resistance, providing a stratification of the mould, combining the more flexible areas with points with greater rigidity.

Alternatively, moulds of a hybrid nature may be included, wherein certain parts, such as the cavities for the pieces, areas receiving direct impact and/or branches are totally rigid, fixed or removable, using materials resistant to distortion and/or breakage. Thus, it is possible to have moulds which have a housing in the moulding area containing interchangeable inserts, for the creation of parts of the piece, which are rigid.

The method for the injection of metals with a low melting point into a polymeric mould of the elastomeric type commences with the choice of mould to be used, in accordance with the piece it is desired to produce. This process is usually manual, but alternatively may be performed automatically, by means of a rotating system holding the different moulds to be used in the production process, reducing the time between changes of mould and enabling an automatic feed from the mould store, wherein they are identified, collected and transported to the injection equipment, wherein the moulds are placed on a rotating system for their insertion into the injection equipment, being identified by the equipment entrusted with their insertion into the injection equipment; thus, at any moment, the piece to be produced may be changed automatically, thanks to the control over said automated system exerted by the regulation and control means of the injection equipment.

Once at the injection equipment, the mould is attached to the supporting and closure means, wherein it is positioned correctly thanks to the centring devices provided, and is closed at the set pressure (manually or automatically), which depends on the area projected, as the pieces of greater size will have a greater projected area and will require a greater closure pressure than smaller pieces; to this, a pressure depending on the hardness of the mould is added, in order not to distort the same excessively, and a corrective coefficient.

The material to be injected is in optimal conditions for the performance of the process within the furnace/crucible, it being possible to control said conditions from the regulation and control means of the injection equipment, or they may be independent.

The transfer and injection means of the injection equipment collect the metal under the ideal conditions from said furnace/crucible so that once the filling stage commences, the pressure system may have in its chamber the corresponding metal for its pressurisation, thus to perform the injection stage.

At the commencement of the injection process itself, prior to and/or during the performance of the regulated injection into the mould, in accordance with the stage of the process, a vacuum is applied to the mould in order to extract the air from the channels and spaces for the formation of the pieces with the vacuum means which are coupled airtightly to the mould via an aperture provided for this purpose. The vacuum is controlled by the regulation and control system, which may be manual or automatic, in order to control the vacuum pressure applied with regard to each of the moulds employed at each moment, possibly with different constitutional properties, to each of the stages of the injection process, and to the type of pieces to be manufactured.

Next, the injection of the metal is performed on the polymer-based mould, at a pressure and flowrate enabling the moulding of the pieces in said mould and, as has been stated above, the flowrate of the metal at the inlet of the piece shall be configured to be between 0.05 m/s and 10 m/s; therefore, the adjustment of the pressure of the pressure system shall be between 0.1 bar and 50 bar, yielding a desired acceleration and a final flowrate depending on the thrust surface of the system employed. These values, controlled by the control and adjustment means, enable the operation of the system at flowrates and pressures which advantageously improve the parameters which could be used until the present in these processes, applied to a non-stationary (that is, centrifugal) flexible mould, as from these means it will be possible to adjust the flowrates, pressure and time of the metal injection process for each type of piece and mould to be used, it being possible to perform this automatically or manually.

The injection stage is comprised of different sub-stages which are controlled and regulated by the control means, and include preferably at least one approach stage, one injection stage, one slowing stage and one compaction stage, and in coordination/synchronisation with the mould supporting and closure means and the vacuum generation means, synchronising the intensity of the force, position and flowrate of the pressure system, acting upon the metal to be injected, according to whether the mould filling is commencing, is being filled or is at its final step, with the pressure exerted by the mould closure means, also synchronising with the creation of the vacuum or otherwise in each stage, as required. This sub-division into stages may be divided into many stages more, at the convenience of the user configuring the process, by means of the use of the control means.

The injection of metal applied and the time of solidification are regulated for each type of piece and the material injected, proceeding on conclusion of the opening of the mould supporting and closure means with its manual or automatic extraction and the insertion of a new empty mould for the next metal injection process.

The advantageous characteristics of said equipment, process and mould provide the invention with solutions to the problems caused by injection casting and centrifugal equipment. Thus, the equipment for metal injection into fixed flexible polymeric moulds portrayed herein, its associated mould and the operating process enable:
- With regard to the well-known injection casting:
   ∘ The availability of a mould for the production of a new metal piece in a brief period of time, as polymeric moulds may be manufactured much more rapidly than metal moulds, and therefore the production of the new metal piece may be commenced in a much briefer space of time, usually between 1 and 3 hours.
   ∘ A reduction in the manufacturing cost of the moulds, as they do not have to be made from non-flexible metallic materials requiring mechanisation processes, and therefore being much costlier.
   ∘ It enables the simple unmoulding of injected metal pieces with undercuts, impossible to manufacture with non-flexible metal moulds, which always require a positive exit angle or the use of complex moulds with various sections wherein mobile parts are used to allow said geometries.
   ∘ It enables the execution of small or medium series at a low cost, due to the reduced cost of manufacturing the mould in comparison with metal moulds.
- With regard to the well-known centrifugal system:
   ∘ Having a briefer cycle and therefore increasing productivity, due to not having to reach optimal revolutions to carry out the casting, and being able to use a higher injection pressure and obtaining a shorter solidification time.
   ∘ It prevents the distortion of the pieces due to the centrifugal force which makes the liquid metal distort the flexible mould proportionally to the radius and to the square of the angular turning velocity.
   ∘ It enables the obtaining of lower, controlled tolerances (repeatable process) in the manufacture of the pieces. It enables a superior finish in comparison with centrifugal castings due to the higher working pressure.
   ∘ It enables the manufacture of pieces with greater mechanical properties due to the higher compaction pressure of the metal.
- With regard to both known processes:
   ∘ It enables the control of the operating parameters of the elements and systems forming the equipment/process, whether automatically or manually, in order to modify them and synchronise them at each of the steps existing in each stage, if necessary, achieving a software simulation of the filing processes.
   ∘ It enables the control of the parameters to prevent, at a given injection pressure, the egress of metal from the closed mould and flash on the pieces injected.

Other details and characteristics will be revealed in the description made below, wherein reference is made to the drawings attached to the present description, wherein, by way of illustration but not limitation, a practical embodiment of the invention is disclosed.

### Brief description of the figures

For the better understanding of the above, a set of drawings is attached wherein, schematically and by way of a non-limitative example, a practical embodiment is portrayed.
Figure 1 is a perspective view of the equipment for injection into a polymeric mould, with the transfer and injection means partially submerged in the furnace of molten metal.
Figure 2 is an elevational view of the injection system, wherein the detail of the coupling between the mould, the closure means and the injection means is marked.
Figure 3 is a view of the detail of the coupling between the polymeric mould, the closure means and the injection means.
Figure 4 is an elevational view of the gooseneck-type injection system.
Figure 5 is an upper plan view of a polymeric mould, seen from within.
Figure 6 is a view of the detail of the coupling between the closure means and the injection means, using thermally insulated contact areas.

### Description of a preferred embodiment

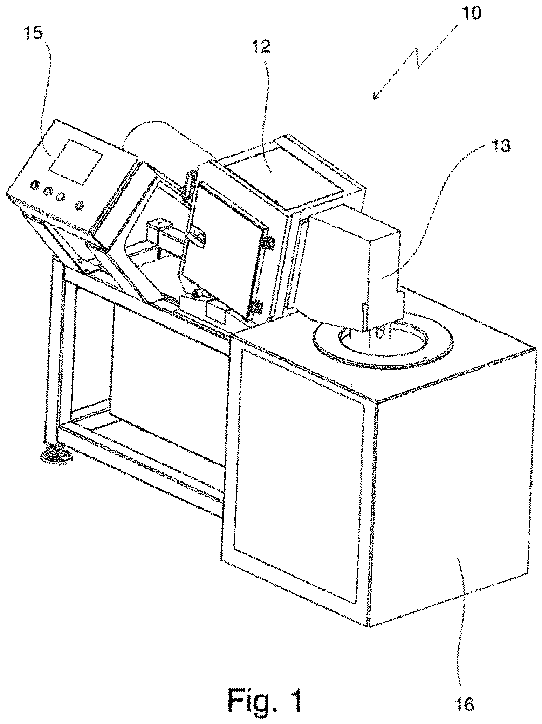

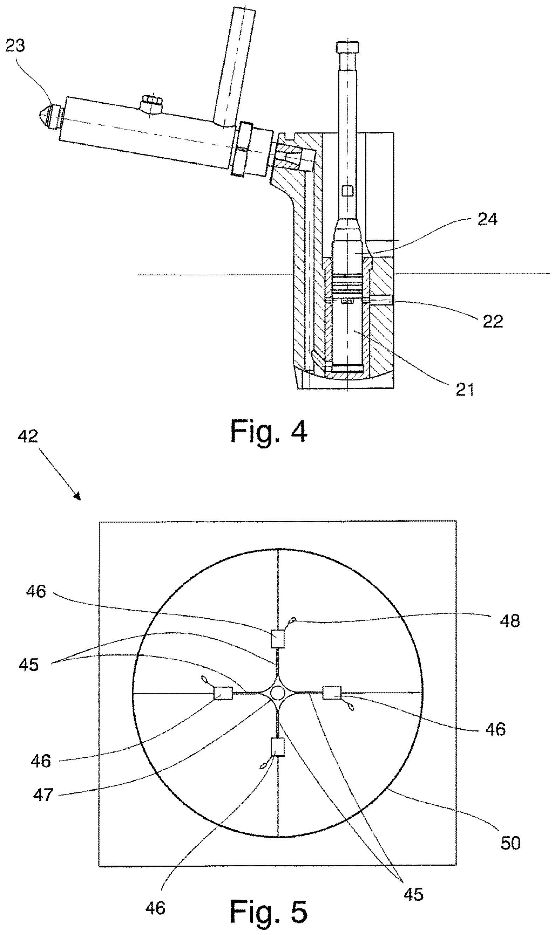

In one of the preferred embodiments of the present invention, as may be seen in figures 1 to 5, the new equipment (10) for injection into a polymer-based mould features a number of systems forming the same, including supporting and closure means (12) of the mould (11), metal transfer and injection means (13) and vacuum generation means, not portrayed in the figures, all governed by regulation and control means (15), which in the present embodiment are considered to be automatic.

The injection equipment (10) requires a supply of molten metal under the ideal conditions of temperature and stirring for its injection into the mould (11), for example Zamak 5 at approximately 400-480 ºC. In the present embodiment, this molten metal will be supplied by a furnace (16) featuring parameters for the regulation of said conditions of temperature and stirring and equipped with its own regulation and control means, although alternatively, said regulation and control means of the furnace (16) may be connected to those of the injection equipment (10) so that it also is governed therefrom in a centralised manner; in other embodiments, the furnace (16) may even be part of the injection system (10) itself.

The transfer and injection means (13) are formed by a number of gooseneck-type ducts, which in the present embodiment are heated, and through which the metal will flow, wherein said means (13) are partially inserted into the molten metal in the furnace (16), the lower part of the gooseneck remaining submerged; that is, the area for the filling of the impulsion chamber (21), so that it is always fed with metal via the aperture (22). This aperture is formed by communicating vessels, and as the impulsion chamber (21) of the gooseneck is in communication with the molten metal in the furnace (16), and with the piston (24) in a raised position, freeing said impulsion chamber (21), the metal flows therein (21). If the level of the metal in the furnace (16) falls, a regulation system may be used to give the piston longer travel, as the metal will not be so high in the impulsion chamber as metal will have entered from a lower level.

The pressure system to perform the injection of the metal on the mould (11) is actuated by the action of a piston (24), which as it moves forward provides conditions of pressure and flowrate on the metal to be injected, wherein said forward movement, travel, pressure and flowrate of the pressure system are controlled and regulated by the means (15), by being aware of the position of said piston and of the previous parameters. The flowrate of the metal at the entrance to the piece will be configured to be between 0.05 m/s and 10 m/s; therefore, the regulation of the pressure in the pressure system will be between 0.1 bar and 50 bar.

As has been mentioned, this embodiment features a transfer and injection means (13), located within the supply means or furnace (16), although alternatively these injection means (13) may be external, of the cold-chamber type, and the molten metal must be supplied via a transfer system which fills the corresponding pressure system.

The extremity of the transfer and injection means, formed by an injector nozzle (23), must be airtightly coupled to the supporting and closure means (12) containing the mould (11). Said airtight coupling is executed by the part-to-part pressurised contact between the nozzle (23) and the support (12) of the mould or the mould (11) itself. This airtight coupling system features complementary shapes so that, on entering into contact and under pressure, the metal injected under pressure cannot leak through said joint, the coupling being of a conical shape, opening towards the mould, to enable the expulsion of the solidified sprue.

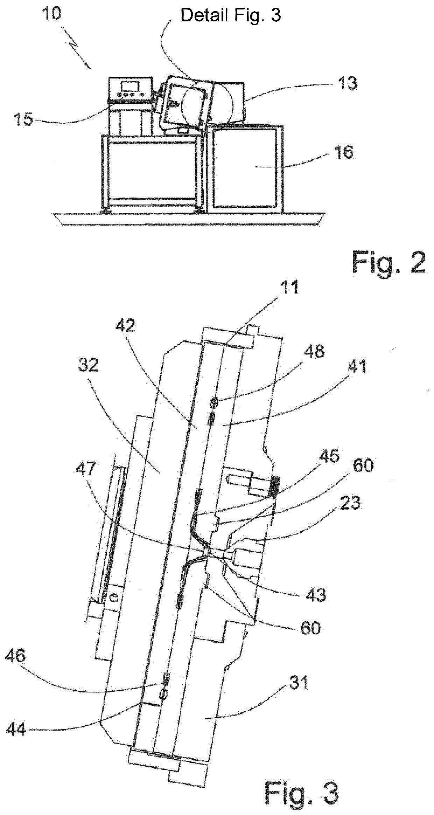

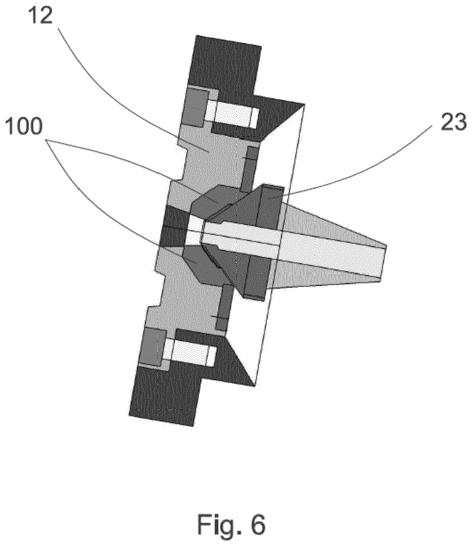

This coupling system may be executed directly; metal part of the nozzle (23) against metal part of the mould (11) support (12), as portrayed in figure 3, but alternatively, as portrayed in figure 6, in the event of desiring thermal insulation of the nozzle (23) area, to prevent the solidification of the metal during injection, contact areas (100) of a rubber-like material are inserted in the coupling shapes; furthermore, due to their certain flexibility, these act as a seal between the bodies coupled under pressure.

This coupling is executed at a slope of 10 degrees to the horizontal in order to collect by gravity any surplus amount of the material injected. Alternatively, this slope may be varied, on condition that this return of molten metal toward the heated area of the injection system is achieved.

The injection equipment (10) features a supporting and closure means (12) into which the mould (11) to be used in accordance with the type of piece to be manufactured must be inserted. In the present embodiment, the choice of mould (11) is performed manually, and said mould will be identified at the regulation and control means (15) for the characteristics of said mould (11) and piece to be known, and for any necessary adjustments to closing pressures, flowrates and injection pressures to be made, likewise the quantity of product, all this being performed automatically.

In alternative embodiments, there will be an automated mould (11) supply means, based on a rotating system whereon the moulds to be used during the production period, and which will be used in the injection equipment (10), are placed. The supply of said moulds to the injection equipment is performed in an automated process by means of the recognition and monitoring of mould references and a transport/interchange system for the same.

The supporting and closure means (12) are formed by two parallel closure plates (31, 32), capable of relative displacement between the two, by means of displacement guide means on the structure of the equipment, in order to insert the corresponding mould (11) between said plates (31, 32) and to close the same by exerting a specific closing pressure on the mould (11). In the present embodiment, one of said plates (31), which is stationary, is anchored to the structure (33) communicating with the transfer and injection means (13), having a slight displacement in order to receive the closing pressure of the plate (32) on the mould (11) located on said stationary plate (31). This placement of the mould (11) on the stationary plate (31) is performed by means of centring devices (60) which are coupled in a particular position to complementary shapes in the mould, ensuring the correct placement of the mould on the plate (31) and therefore the correct coupling of the assembly.

The plates (31, 32) may also feature perimetral walls locking the mould (11), to prevent the lateral expansion of the same (11) at the time of exerting the closing pressure.

The value of the closing pressure of the mould (11) exerted by the plates (31, 32) is that corresponding to the projected area pressure, as pieces with a greater volume will have a greater projected area and will require a greater closure pressure than smaller pieces; to this, a pressure corresponding to the hardness of the mould is added, in order to prevent excessive distortion of the same, and a corrective coefficient; the global result varying between values slightly higher than the injection pressure to values of higher closing pressures, with no need to reach the closing pressures for injection into metallic moulds. These closing pressures, which are governed automatically, are synchronised with the execution of the different stages of the injection process, said stages of the injection process being synchronised in turn with the vacuum system, thanks to the regulation and control means (15), which coordinate the values of the pressure exerted by the supporting and closure means (12) of the mould (11) with the real-time position and the values of flowrate and pressure of the piston (24) of the injection system, and the generation of a vacuum within said mould (11).

The correspondence between the generation of vacuum and the injection stages correspond to the table/diagram below, where it may be seen that the generation of vacuum commences at the beginning of the injection stage and will conclude at the beginning of the compaction stage.

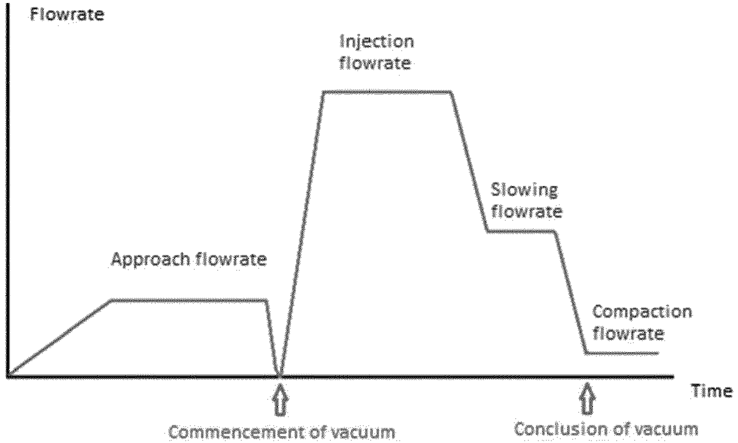

The stationary plate (31) features an aperture which coincides with the position and size of the injector nozzle (23) for its airtight coupling, and also coincides with the inlet aperture (43) of the mould (11).

The vacuum generation means are located behind the closure plate (32) of the supporting and closure means (12), so that via the corresponding aperture in said plate (32), the mould (11) may be airtightly coupled to the aperture (44) destined for the extraction of air from the channels of the mould (11).

The parameters of closing pressure, approach and flowrate of the injection pressure system, and therefore, the parameters of injection of the material, of the conditions of said material, of the vacuum pressures of the mould and the cooling parameters of the moulds are governed by the regulation and control means (15) of the injection equipment (10), aided by the corresponding sensors of the temperature conditions, pressure, travel regulators, identification of the mould and of the piece to be manufactured, etc. This control and regulation means (15) automatically configures the above parameters in a coordinated manner, in accordance with the stages occurring.

The mould (11) employed in the equipment (10) is polymer-based, thus featuring elastic properties, which vary in accordance with its composition and treatment. For its application in metal injection processes and equipment, of the two parts (41, 42) into which the mould (11) may be divided to perform its unmoulding, in the part (41) whereby the inflow of injected material is performed, an aperture (43) is foreseen for this purpose, communicating with the channels (45) which will convey the metal to the cavities (46) wherein the pieces are formed. Upstream of the branching of the inlet aperture (43) into the different channels (45), a distribution means (47), of a more resistant material than that of the elastomer employed in the mould, preferably metallic or ceramic, capable of resisting distortion due to the pressure of the material injected and of resisting the multiple injection processes to which the mould (11) will be subjected, is to be found in the interior of the mould (11), solidarily therewith, specifically designed thereto and to the specific configuration of its channels (45).

The shape of said distribution means (47) is such that it prevents as much as possible the loss of load at the metal inlet, and conveys said pressurised metal to the channels (45), it being the commencement of said channels (45), preventing the mould from damage at the area where it receives the impact of the injection, distortions affecting the useful life of the mould and the correct injection of the material, likewise the correct formation of the pieces.

The mould (11) features sprues (48) to house the air displaced by the metal which may remain after creating the vacuum.

The mould (11) features vacuum channels (50) which communicate with the vacuum generation means and which in turn connect with the cavities (46) and the channels (45) for the extraction of the air therein, and that which enters subsequently upon the entry of the metal into the injection system, displacing the air existing in said injection system.

The mould (11) may include a number of channels for cooling and/or heating fluid, which in the case of siliconized moulds or moulds composed of resins with high thermal insulation properties, may provide the necessary conditions for the process of obtaining the pieces, in addition to maintaining the conditions of temperature of the mould, in order to maintain its properties of hardness, which may vary according to the variations in temperature.

In alternative embodiments, with a rotating mould supply system, once the mould (11) has been extracted from the injection equipment (10), mould (11) cooling means are provided, based on the ventilation of the same.

With regard to the method followed by the injection equipment (10), once the mould (11) has been inserted into the supporting and closure means (12), and said mould (11) and the piece to be manufactured have been identified at the regulation and control means, the following stages and configurations are performed:
- The supporting and closure means carry out the coupling between the closure plate (32) and the mould (11), which is in its correct position due to the centring devices (60) which prevent incorrect coupling, and is aligned with the nozzle (23) to perform the airtight coupling between mould (11) and nozzle (23).
- The mould is closed at a pressure governed by the regulation and control means (15), in accordance with the identification of the type of mould (11) and the injection parameters to be applied during the process, all the above automatically; this will be the projected area pressure, to which a pressure depending on the hardness of the mould and a corrective coefficient will be added.
- The transfer means (13), which are partially inserted into the molten metal in the furnace (16), collect the molten metal in the impulsion chamber (21) via the aperture of communicating vessels, the piston (24) being at its highest position, enabling the ingress of metal into said chamber (21).
- The generation of a vacuum in the mould (11) for the extraction of air from the channels (45) and the cavities (46) for the formation of pieces, is performed by the vacuum means which are airtightly coupled to said mould (11) via an aperture provided for this purpose, wherein this vacuum system is controlled by the regulation and control system, which will activate it at the commencement of the injection stage and will deactivate it at the commencement of the compaction stage.
- Next, the injection of the metal on the polymer-based mould (11) is performed, at a pressure and flowrate which enables the moulding of the pieces in said mould (11), regulating the parameters of piston (24) travel and the pressure exerted by said piston, in order to achieve the desired acceleration of the same. This stage is divided into various sub-stages, these being: an approach stage, an injection stage, a slowing stage and a compacting stage, and in coordination/synchronisation with the mould supporting and closure means and the vacuum generation means, synchronising the intensity of the force, position and flowrate of the pressure system, acting upon the metal to be injected, depending on whether it is at the approach stage, wherein there is a mild acceleration of the piston to convey the metal to the mould (11) inlet at a low flowrate, while at the commencement of the filling of the mould, during the injection stage, a great acceleration is performed, with a high flowrate of metal into the mould, which will be slowed after a period of time determined by the volumes of each piece to be produced, reducing the flowrate prior to the filling of the pieces, in order that it may be a lower flowrate which performs the final filling at the compaction stage. All of the above, as has been stated, synchronised with the pressure exerted by the mould closure means, also synchronising with the creation of the vacuum or otherwise in each stage, as required.
- Said injection of metal and the solidification time, likewise the action of the mould heating/cooling elements, are adjusted for each type of piece and material injected; once completed, proceeding with the opening of the supporting and closure means (12) of the mould (11), for its manual or automatic extraction and the insertion of a new empty mould (11) for the next metal injection process.

The means (15) for the control and adjustment of the operating parameters of the systems included in the equipment (10) perform a static adjustment prior to each injection method in accordance with the mould (11), the material to be injected and the piece to be obtained, and a dynamic adjustment during the injection process in accordance with the current stage, controlling:
- the parameters of the metal to be injected within the supply device (16); that is, temperature and stirring;
- the force exerted by the supporting and closure means (12) on the mould (11);
- the pressure and travel of the piston (24), and consequently the injection flowrate into the mould (11).
- the quantity, flowrate, pressure, temperature, etc. of the material injected and of the transfer means (13).
- the mould (11) cooling parameters and solidification time.
- the vacuum system parameters.

Although reference has been made to a specific embodiment of the invention, it is evident to an expert skilled in the art that the invention described is susceptible to numerous variations and modifications, and that all the details mentioned may be substituted by other technically equivalent details, without departing from the scope of protection defined by the appended claims.

## Claims

1. **METHOD FOR THE INJECTION OF METALS OR ALLOYS WITH A LOW MELTING POINT INTO A POLYMERIC MOULD OF AN ELASTOMERIC TYPE** of the type which employ injection pressure control means and are equipped with a vacuum means, **characterised in that** the method comprises at least the following stages:
- choice of the mould to be employed in accordance with the piece it is desired to produce; its identification and insertion into the injection equipment;
- once in the injection equipment, the mould is placed in the supporting and closure means, wherein it is positioned and locked at the set pressure; and this will be the projected area pressure, to which a pressure depending on the hardness of the mould and a corrective coefficient will be added;
- the transfer and injection means of the injection equipment collect the metal under the ideal conditions from said furnace/crucible, these being the melting point temperature of said metal or higher, so that said metal is conveyed to the pressure system in order to perform the injection; as well as the correct stirring of said material, so that once the filling stage commences, the pressure system may have in the chamber of said pressure system the corresponding metal, thus to exert pressure thereon and to perform the injection stage;
- prior to the commencement of the injection process itself, and/or during the metal injection itself, a vacuum is performed on the mould in order to extract the air from the channels and spaces for the formation of pieces by the vacuum means, which are airtightly coupled to said mould via an aperture provided for that purpose, wherein this vacuum system is controlled by the regulation and control system;
- next, the injection of the metal on the polymer-based mould is performed, at a pressure and flowrate enabling the moulding of the pieces in said mould; the flowrate of the metal at the inlet of the piece is configured to be between 0.05 m/s and 10 m/s, so the regulation of the pressure of the pressure system will be between 0.1 bar and 50 bar, and being said injection stage divided into various sub-stages wherein the injection flowrate into the mould is adjusted in accordance with whether it is the commencement of the injection, the filling or the compaction, it being possible to divide this into more stages, all coordinated with the regulation and control means;
- said injection of metal applied and the solidification time are adjusted for each type of piece and material injected; on conclusion thereof proceeding with the opening of the mould supporting and closure means, for its manual or automatic extraction, and the insertion of a new empty mould for the next metal injection process;
wherein said process features means for the control and adjustment of the operating parameters of the systems included in the equipment, performing a static adjustment prior to each injection method in accordance with the mould, the material to be injected and the piece to be obtained, and a dynamic adjustment during the injection process in accordance with the current stage, synchronising and varying the mould closure force with the injection flowrates at each stage, and activating or deactivating the vacuum generation means.

2. **METHOD FOR THE INJECTION OF METALS OR ALLOYS WITH A LOW MELTING POINT INTO A POLYMERIC MOULD OF AN ELASTOMERIC TYPE,** according to claim 1, **characterised in that** the operating parameters to be controlled are at least:
- the temperature and stirring parameters of the material to be injected while in the supply device; that is, temperature and stirring;
- the force exerted by the supporting and closure means on the mould;
- the injection pressure and flowrate;
- control of the quantity, flowrate, pressure, temperature, etc. of the material injected and of the transfer means;
- the mould cooling temperature and solidification time parameters;
- the pressure of the vacuum system.

3. **METHOD FOR THE INJECTION OF METALS OR ALLOYS WITH A LOW MELTING POINT INTO A POLYMERIC MOULD OF AN ELASTOMERIC TYPE,** according to claim 1, **characterised in that** the injection stage comprises different sub-stages which are controlled and regulated by the control means, and in coordination/synchronisation with the mould supporting and closure means and the vacuum generation means, synchronising the intensity of the force exerted on the mould, there being an approach stage, an injection stage, a slowing stage and a compaction stage, synchronising the intensity of the force, position and flowrate of the pressure system acting upon the metal to be injected, depending on whether it is at the approach stage, wherein there is a mild acceleration of the piston to convey the metal to the mould (11) inlet at a low flowrate, while at the commencement of the filling of the mould, during the injection stage, a great acceleration is performed, with a high flowrate of metal into the mould, which will be slowed after a period of time determined by the volumes of each piece to be produced, reducing the flowrate prior to the filling of the pieces, in order that it may be a lower flowrate which performs the final filling at the compaction stage; all the aforesaid, as has been stated, synchronised with the pressure exerted by the mould closure means and likewise synchronised with the creation of the vacuum in such a way that it will be activated at the commencement of the injection stage and will conclude at the commencement of the compaction stage.

4. **METHOD FOR THE INJECTION OF METALS OR ALLOYS WITH A LOW MELTING POINT INTO A POLYMERIC MOULD OF AN ELASTOMERIC TYPE,** according to claim 1, **characterised in that** the stage of selecting the mould to be used in the process and the identification of the same is performed automatically, by means of a rotating system holding the different moulds to be used in the production process.

5. **METHOD FOR THE INJECTION OF METALS OR ALLOYS WITH A LOW MELTING POINT INTO A POLYMERIC MOULD OF AN ELASTOMERIC TYPE,** according to claim 1, **characterised in that** in the stage of generating the vacuum prior to injection, on reaching the set vacuum pressure in the mould, the control system communicates this fact.

6. **EQUIPMENT FOR THE INJECTION OF METALS OR ALLOYS WITH A LOW MELTING POINT INTO A POLYMERIC MOULD OF AN ELASTOMERIC TYPE,** of the type which executes a method such as that described in claims 1 to 5, and is equipped with a supply of metal, whether incorporated in this equipment or as auxiliary equipment, **characterised in that** the equipment for the injection of metals or alloys with a low melting point into a polymeric mould, this being of a high-temperature vulcanised elastomeric or Liquid Silicone Rubber (LSR) type, features:
- means for the transfer and injection of the metal or alloy with a low melting point to be injected, fed by the material supply means, wherein said means are constituted at least by means for the displacement through the same of said metal, and by a pressure system entrusted with the injection of the metal on the polymer-based mould;
- a mould supporting and closure means formed at least by a mould positioning/centring system, formed by centring devices, to locate said mould in the correct position for its coupling, and by a closure system with adjustable pressure;
- a system for the generation of a vacuum within the mould;
- a polymeric mould of a high-temperature vulcanised elastomeric or Liquid Silicone Rubber (LSR) type, which is inserted into the supporting and closure means, equipped with an airtight coupling between said mould and the transfer and injection means;
- means for the regulation and control of the equipment, which may be manual or automatic, which control and regulate at least the device for the maintenance of the conditions of the metal in the material supply means, the transfer and injection means, the mould supporting and closure means, and the operation of the vacuum system.

7. **EQUIPMENT FOR THE INJECTION OF METALS OR ALLOYS WITH A LOW MELTING POINT INTO A POLYMERIC MOULD OF AN ELASTOMERIC TYPE,** according to claim 6, **characterised in that** the regulation and control means of the equipment regulate and adjust, statically prior to each injection method in accordance with the mould, the material to be injected and the piece to be obtained, and dynamically during the injection process, at least the following parameters:
- the temperature and stirring parameters of the material to be injected while in the supply device;
- the force exerted by the supporting and closure means on the mould;
- the pressure, piston travel and, therefore, the injection flowrate into the mould;
- control of the quantity, flowrate, pressure, temperature, etc. of the material injected and of the transfer and injection means;
- the mould cooling temperature and solidification time parameters;
- the pressure of the vacuum system,
in all of the above, it being possible to perform multiple divisions or stages, as many as may be required, for the coordinated control of said parameters.

8. **EQUIPMENT FOR THE INJECTION OF METALS OR ALLOYS WITH A LOW MELTING POINT INTO A POLYMERIC MOULD OF AN ELASTOMERIC TYPE,** according to claim 6, **characterised in that** the vacuum system is formed by a system with a vacuum pump, a vacuum reservoir, measuring elements, filters for particulates and possible contaminants, and the corresponding valves and ducts.

9. **EQUIPMENT FOR THE INJECTION OF METALS OR ALLOYS WITH A LOW MELTING POINT INTO A POLYMERIC MOULD OF AN ELASTOMERIC TYPE,** according to claim 6, **characterised in that** the vacuum system is airtightly coupled to the mould via an aperture in said mould, wherein said joint between the two is airtight.

10. **EQUIPMENT FOR THE INJECTION OF METALS OR ALLOYS WITH A LOW MELTING POINT INTO A POLYMERIC MOULD OF AN ELASTOMERIC TYPE,** according to claim 6, **characterised in that** the metal transfer and injection means feature an injection chamber upstream of the mould, which is filled with the material to be injected coming from the furnace or crucible, and wherein the pressure system acts.

11. **EQUIPMENT FOR THE INJECTION OF METALS OR ALLOYS WITH A LOW MELTING POINT INTO A POLYMERIC MOULD OF AN ELASTOMERIC TYPE,** according to claim 10, **characterised in that** the metal transfer and injection means are formed by a heated gooseneck partially inserted into the molten metal to be injected.

12. **EQUIPMENT FOR THE INJECTION OF METALS OR ALLOYS WITH A LOW MELTING POINT INTO A POLYMERIC MOULD OF AN ELASTOMERIC TYPE,** according to claim 6, **characterised in that** the pressure system of the metal transfer and injection means is based on an assembly of impulsion elements for the material to be injected into the mould, these being formed by a mechanical means, (pneumatic piston, hydraulic piston, auger, etc.) controlled by the adjustment and control means with regard to the pressure, travel, stage and flowrate of the material to be injected, adjusted manually or automatically by said adjustment and control means and synchronised with the mould supporting and closure means and the vacuum generation system.

13. **EQUIPMENT FOR THE INJECTION OF METALS OR ALLOYS WITH A LOW MELTING POINT INTO A POLYMERIC MOULD OF AN ELASTOMERIC TYPE,** according to claim 6, **characterised in that** the supporting and closure means are provided with a seal, integrated in the mould or independent therefrom, which facilitates the closing action at lower pressures.

14. **EQUIPMENT FOR THE INJECTION OF METALS OR ALLOYS WITH A LOW MELTING POINT INTO A POLYMERIC MOULD OF AN ELASTOMERIC TYPE,** according to claim 6, **characterised in that** the injection of the metal into the mould is performed on a slope for the collection by gravity of the surplus material.

15. **EQUIPMENT FOR THE INJECTION OF METALS OR ALLOYS WITH A LOW MELTING POINT INTO A POLYMERIC MOULD OF AN ELASTOMERIC TYPE,** according to claim 6, **characterised in that** it features a mould cooling system by means of ventilated tables or the cooling of the supporting and closure means.

16. **EQUIPMENT FOR THE INJECTION OF METALS OR ALLOYS WITH A LOW MELTING POINT INTO A POLYMERIC MOULD OF AN ELASTOMERIC TYPE,** according to claim 1, **characterised in that** it is equipped with an automatic system for the monitoring of the metal existing in the transfer and injection means.

17. A **POLYMERIC MOULD OF AN ELASTOMERIC TYPE,** of the type employed in processes of the pressurised injection of metals or alloys with a low melting point such as that mentioned in claims 1 to 5, constituted by two separable sections for the unmoulding of the pieces, **characterised in that** the mould features:
- in at least one of said sections, means for the ingress of the material injected, leading from said inlet through the distribution channels to the cavities which form the pieces;
- means for the ingress of metal, airtightly coupled to the metal transfer and injection means of the injection equipment;
- its own distribution means, in said inlet means, located at the point of branching/distribution of the incoming flow from the transfer and injection means, toward the filling channels of the mould, being specific to each mould for direct distribution to each channel;
- an aperture for the airtight coupling of the vacuum system, provided with independent or specific channels which communicate with all the channels and internal spaces which will receive the metal injected under pressure.

18. **A POLYMERIC MOULD OF AN ELASTOMERIC TYPE,** according to claim 17, **characterised in that** the distribution piece integrated in the mould is manufactured from a material with a greater resistance than that of the elastomer forming the mould, such as metallic or ceramic materials or an elastomer with a greater resistance than that of the mould, resistant to the pressures and temperatures employed and to the flow of metal at said pressure.

19. **A POLYMERIC MOULD OF AN ELASTOMERIC TYPE,** according to claim 17, **characterised in that** the mould is provided with internal protections or new distribution means at the points of impact of the material injected or of its branching, and also at the inlet from the transfer and injection means, having a greater resistance than that of the elastomer chosen for the mould itself, such as metallic or ceramic materials.

20. **A POLYMERIC MOULD,** according to claim 17, **characterised in that** the mould is of a hybrid nature, featuring therein totally rigid, fixed or removable parts subjected to the impact of the material injected or its branching, using materials resistant to distortion, wear and/or breakage.

21. **A POLYMERIC MOULD OF AN ELASTOMERIC TYPE,** according to claim 17, **characterised in that** the connection between the vacuum system and the cavities destined for the formation of the pieces is performed via a minimal cross-section which at most shall be of 4 mm2, to prevent the passage of the metal.

22. **A POLYMERIC MOULD,** according to claim 17, **characterised in that** in the mould a heating or cooling layer or element is inserted to facilitate the exchange of heat with the material injected, based on electric elements or cooling/heating channels.
